# EUROPEAN PATENT APPLICATION

(11) **EP 4 386 422 A1**
(43) Date of publication of application: **19.06.2024**
(21) Application number: 22213608.7
(22) Date of filing: 14.12.2022
(51) Int. Cl.: G01S 5/02

(54) **ASSET LOCATING METHOD**

(71) Applicant: Nagravision Sàrl, 1033 Cheseaux-sur-Lausanne (CH)
(72) Inventor: Conus, Joël, Cheseaux-sur-Lausanne (CH); Gradassi, Luca, Cheseaux-sur-Lausanne (CH); Prisi, Marcel, Cheseaux-sur-Lausanne (CH); Pablo, Palomero, Cheseaux-sur-Lausanne (CH)
(74) Representative: Mewburn Ellis LLP

(57) **Abstract**

A method for locating an asset in an environment, the method comprising receiving, at a first receiver, signal from a tag associated with the asset, wherein the tag is positioned on or adjacent to the asset; receiving, at the first receiver, a signal from the tag associated with the asset at a second time, wherein the second time is different to the first time, and wherein the first receiver has moved location in the environment between the first time and the second time; receiving, at a second receiver, a signal from the tag associated with the asset; and determining the location of the asset in the environment based on the signal received at the first receiver at the first time, the signal received at the first receiver at the second time,, the signal received at the second receiver, a track of the location of the first receiver in the environment at the the first time and the second time, and a location of the second receiver in the environment at the time when the second receiver received the signal.

## Description

### Field of the Invention

The present invention relates to a method for locating an asset and a system for locating an asset in an environment. Particularly, although not exclusively, the present invention relates to a method for locating an asset in an environment using two receivers, wherein at least one of the receivers is moving in the environment.

### Background

In many environments, such as warehouses, there is a need to efficiently locate an asset in the environment. For example, in a warehouse environment, there may be multiple assets (e.g., objects) in the warehouse and the correct asset may need to be found quickly.

Conventionally, humans were tasked with finding the correct asset in an environment such as a warehouse. They often relied on maps of the environment, which mapped the location of different assets in the environment. The user could then follow the map to locate the required asset. However, this approach is labour intensive, and thus inefficient.

It is known to track assets using GPS (Global Positioning System). A GPS tag positioned on the asset communicates with relevant satellites such that the asset can be located wherever they are positioned around the world. GPS provides live tracking of assets, and is thus especially useful for tracking assets in transit, such as rental cars. However, GPS tracking can be costly to implement, especially in a warehouse or indoor environment. Furthermore, GPS tracking of assets cannot provide an accurate or precise location in an indoor environment such as a warehouse. For example, GPS trackers may only be accurate to within 3-5m. In a warehouse environment, although the GPS tracking may locate the asset to within 3-5m, a human would still need to manually search for and find the asset within that area. This leads to inefficient asset location.

It is also known to use radio frequency (RF) technology to locate assets in an environment. In particular, a radio frequency tag may be positioned on the asset, and the location of the asset may be determined based on a Relative Signal Strength Indicator (RSSI) value measured by a receiver. Bluetooth Low Energy (BLE) or Near Field Communication (NFC) technology may be used to locate assets in this way. Although these approaches are less costly than GPS, they are still not precise or accurate enough to provide efficient location of assets in an indoor environment such as a warehouse.

Furthermore, radio frequency (RF) multipath propagation/interference resulting from the radio waves rebounding on objects and/or walls before being received by the receiver is an issue, especially in an indoor environment. Multipath interference occurs when an RF signal arrives at a receiver via two or more routes. This results in the total length of each signal path, and thus the time delay and phase of each received signal, to be different. This can lead to the two or more signals arriving in phase or out of phase, depending on the paths taken, meaning the signal power (RSSI) increases or decreases depending on the path taken. For stationary assets at a fixed location in a fixed environment, the multipath interference will be substantially constant over time when the assets' signals are measured from a given point in space, leading to large errors in the location measurement, and thus reduced accuracy.

The present invention has been devised in light of the above considerations.

### Summary of the Invention

According to a first aspect, there is provided a method for locating an asset in an environment, the method comprising:
receiving, at a first receiver, a signal from a tag associated with the asset at a first time, wherein the tag is positioned on or adjacent to the asset,
receiving, at the first receiver, a signal from the tag associated with the asset at a second time, wherein the second time is different to the first time, and wherein the first receiver has moved location in the environment between the first time and the second time;
receiving, at a second receiver, a signal from the tag associated with the asset; and
determining the location of the asset in the environment based on the signal received at the first receiver at the first time, the signal received at the first receiver at the second time, the signal received at the second receiver, a track of the location of the first receiver in the environment at the first time and the second time, and a location of the second receiver in the environment at the time when the second receiver received the signal.

In this way, as the location of the receivers (e.g., gateways) is known at the times when the signals are received, the location of the tag can be determined from the received signals. The location of the asset can then be inferred from the location of the tag, as the tag is located on or adjacent to the asset. Furthermore, as the first receiver moves between receiving signals from the tag, the amount of multi-path interference in the signals received at the first receiver will be different. Thus, the tag and therefore the asset can be more accurately located compared to methods in which all the receivers are located at fixed locations such that the multipath interference received at each respective receiver is substantially constant over time.

Therefore, in e.g., a warehouse environment, a precise location of a required asset in the warehouse can be found, such that an operator is then able to efficiently locate the required asset. Similarly, in a hospital or airport environment, for example, a precise location of the required asset in the hospital or airport can be found such that the required asset can be efficiently located.

Optional features will now be set out. The following optional features are combinable singly or in any combination with any aspect of the invention.

In some examples, the first receiver may receive the signals at the first time and the second time by sampling, at the first time and the second time, a continuous signal transmitted from the tag. In these examples, the tag may transmit a constant continuous signal (e.g., of a fixed value, frequency, amplitude, and/or having at last one (e.g., RF) characteristic that remains constant). The first receiver may then sample the constant continuous signal at the two different times to receive the signal at the first time and the signal at the second time. As the first receiver has moved location in the environment between the first time and the second time, the signal power (RSSI) and/or Angle of Arrival, AoA, of the signals received at the first receiver at the first and second time will be different (due to multipath interference), even when the continuous signal transmitted from the tag is constant. In some examples, the continuous signal transmitted from the tag may not be a constant continuous signal (e.g., its value/amplitude/frequency may change over time).

In some examples, the tag may be associated with a unique identifier (e.g., a value) such that it can be identified (e.g., from other tags). The tag can then transmit this identifier to its (RF) front end in a loop, where it may be encoded and/or modulated before being transmitted on a given frequency. In these examples, a continuous signal may be considered a signal that maintains at least one (RF) characteristic constant (e.g., encoding, modulation, frequency etc.), and thus maintains a constant (radio) protocol, and that continually transmits the same value (e.g., its unique identifier) in a loop. In some examples, the (RF) protocol may vary the modulation or frequency over time.

In some examples, the tag may not transmit a unique identifier, but may instead transmit a continuous tone (e.g., at a constant pitch), which does not carry information but that is transmitted with a predefined modulation (e.g., amplitude modulation) at a predefined frequency.

In some examples, the signal received at the first receiver at the first time and the signal received at the first receiver at the second time may be two discrete (e.g., non-continuous) signals transmitted from the tag. In other words, the tag may transmit discrete signals, rather than a continuous signal. These signals may be periodically transmitted or aperiodically transmitted from the tag. The tag may transmit discrete signals of a constant value/amplitude. However, as the first receiver has moved location in the environment between the first time and the second time, the signal power (RSSI) of the signals received at the first receiver at the first and second time will be different (due to both multipath interference and because the distance between the first receiver and the tag has changed as the first receiver has moved), even when the discrete signals transmitted from the tag have the same value/amplitude. In some examples, the discrete signals transmitted from the tag may not have the same/constant values/amplitudes etc.

The signal received at the second receiver may be received at the first time, the second time, or at another different time. Similarly to the first receiver, the second receiver may receive the signal by sampling a continuous (e.g., constant) signal transmitted from the tag in order to receive the signal. Alternatively, the second receiver may receive a discrete signal transmitted from the tag. In some examples, a same signal transmitted from the tag may be received at the first receiver and the second receiver. However, the signals received, and in particular the signal power (RSSI) and/or Angle of Arrival, AoA, of the signals received at the first and second receiver will be different due to multipath interference resulting from the different locations of the two receivers. The signals received at the first and/or second receiver may comprise electromagnetic wave signals. For example, the signals received at the first and/or second receiver may comprise radio-frequency, RF, signals. RF signals may be electromagnetic signals including radio waves with frequencies of 300GHz and below. For example, a RF signal may include one or more electromagnetic waves in the frequency range from (approximately) 20kHz to 300GHz.

Alternatively/additionally, the signals received at the first and/or second receiver may comprise visual waves (e.g. electromagnetic waves in the frequency range from approximately 400THz - 800THz), infrared waves (e.g., electromagnetic waves in the frequency range from approximately 300GHz - 400THz), and/or ultraviolet waves (e.g., electromagnetic waves in the frequency range from approximately 800THz - 30PHz).

Alternatively/additionally, the signals received at the first and/or second receiver may comprise pressure wave signals, such as sound wave signals.

A plurality of signals may be received at the first receiver (e.g., more than 2), e.g., at different times. A plurality of signals may be received at the second receiver, e.g., at different times. As mentioned above, the plurality of signals received at the first/second receiver may be received by sampling a continuous signal emitted from the tag at a plurality of different times. In other examples, the plurality of signals received at the first/second receiver may be different discrete (e.g., non-continuous) signals emitted from the tag.

A plurality of assets may be located in the environment, and the method may be for locating an asset from the plurality of assets in the environment. Each of the plurality of assets may have a respective tag associated with the asset, wherein the respective tag is positioned on or adjacent to its corresponding asset.

The one or more assets may be fixed in the environment (at least during the time period in which the signals are received at the first and second receiver).

The environment may be an inside space, such as one or more rooms, or a warehouse, for example. The environment may be (part of) a hospital, an airport, or a server farm, for example. In a warehouse environment, the tag may be positioned on a pallet or containing holding the asset, or on a shelf upon which the asset is positioned, for example.

The first and second receiver may be positioned at different locations in the environment.

The second receiver may have a fixed location in the environment. The second receiver may be positioned on a wall, ceiling, floor, or other stationary object in the environment.

Alternatively, the second receiver may be a moving receiver, similarly to the first receiver.

In these examples, the method may comprise:
receiving, at the second receiver, a signal from the tag associated with the asset at a third time;
receiving, at the second receiver, a signal from the tag associated with the asset at a fourth time, wherein the fourth time is different to the third time, and wherein the second receiver has moved location in the environment between the third time and the fourth time.

Then, determining of the location of the asset in the environment may be based on the signal received at the first receiver at the first time, the signal received at the first receiver at the second time, the signal received at the second receiver at the third time, the signal received at the second receiver at the fourth time, a track of the location (e.g., location track) of the first receiver in the environment at the first time and the second time, and a track of the location (e.g., location track) of the second receiver in the environment at the third time and the fourth time.

The third time and the fourth time may correspond to (e.g., be the same as) the first time and the second time, respectively. Accordingly, the first receiver and second receiver may receive signals at the same time (e.g., if discrete signals are transmitted from the tag, or if the first and second receiver sample a continuous signal at the same times). Alternatively, the first time and second time may not correspond to the third time and fourth time (e.g., the first and second receiver may sample a continuous signal at different times, or may receive different discrete signals transmitted from the tag).

Optionally, the method may comprise receiving, at a third receiver, at least one signal from the tag associated with the asset, wherein determining the location of the asset in the environment is additionally based on the at least one signal received at the third receiver, and a location of the environment at the time when the third receiver received the at least one signal. The at least one signal received at the third receiver may be received by sampling a continuous signal emitted from the tag, or may be a discrete (e.g., non-continuous) signal emitted from the tag.

In some examples, the third receiver is stationary in the environment (e.g., at a fixed location in the environment). In other examples, the third receiver may be a moving receiver, similarly to the first receiver. As such the third receiver may receive a signal at a fifth time and a signal at a sixth time and may have moved locations in the environment between fifth time and the sixth time. When the third receiver is a moving receiver, determining the location of the asset may additionally be based on the signals received at the third receiver at the fifth and sixth time, and a track of the location of the third receiver in the environment at the fifth and sixth time. The fifth and sixth time may correspond to (e.g., be the same as) the first time and the second time, respectively, and/or the third time and the fourth time, respectively. Alternatively, the fifth and sixth time may be different from the first, second, third, and/or fourth time.

Increasing the number of receivers used in the determination of the location of the asset improves the accuracy of the determined location. Therefore, the location of the asset in the environment may be determined based on signals received at a plurality (e.g., four, five, six, seven, eight or more) receivers in the environment. These additional receivers may be stationary or moving in the environment.

As described above, the environment may include a plurality of assets. The number of assets in the environment may be larger than the number of receivers in the environment. In some examples, the number of receivers in the environment may be larger than the number of assets in the environment.

It is to be understood that determining the location of the asset corresponds to determining the location of the tag as the tag is located on or adjacent to the asset. In other words, the location of the asset can be inferred as approximately equivalent to the location of the corresponding tag.

Determining the location of the asset in the environment may include determining a location of the asset relative to the receivers; and determining the location of the asset in the environment based on the location of the asset relative to the receivers, the track of the location of the first receiver in the environment and the location of the second receiver in the environment.

The location of the asset relative to the receivers may be determined using a first technique, and the track of the location of the first receiver in the environment may be determined using a second technique, the second technique having a higher accuracy than the first technique.

The second technique having a higher accuracy than the first technique may be understood as meaning that the second technique can locate an object to within a smaller area than the first technique. In this way, the determined track of the location of the first receiver is more accurate than the determined location of the asset relative to the receivers.

Generally, more accurate location techniques are more complex and thus involve additional costs than less accurate location techniques. Therefore, in environments with a plurality of assets where the number of assets exceeds the number of receivers, the overall accuracy of the determined location of the asset in the environment can be improved without requiring a more accurate location technique to be used with the tag of each asset. The more accurate location technique may only be used for locating the first receiver (and any other moving receivers), rather than for each of the plurality of tags/assets. This can reduce complexity and costs compared to providing a plurality of assets' tags with a more accurate location technique capability.

The location of any static receivers (e.g., the second receiver if it is a static receiver having a fixed position in the environment and/or any additional static receivers) may be predetermined. For example, the position of the static receiver(s) in the environment may be detected during installation. In some examples, the location of any static receivers (e.g., the second receiver if it is a static receiver having a fixed position in the environment and/or any additional static receivers) may be determined using the more accurate second technique, e.g., to simplify and speed up their deployment/installation as their position is not required to be measured during installation).

Determining the location of the asset relative to the receivers may include using a Received Signal Strength Indication, RSSI, and/or an Angle of Arrival, AoA, of one or more of the signals received at the first receiver and/or the second receiver. As such, the (less accurate) first technique may include using a RSSI and/or AoA of one or more of the signals received at the receivers. RSSI may be understood as a measurement of the power present in a received (e.g., radio) signal. AoA may be understood as the direction from which the (e.g., radio, optical or acoustic) signal is received. Bluetooth Low Energy (BLE) technology may be used to determine RSSI and/or AoA, for example.

The track of the location (e.g., the location path/track) of the first receiver in the environment may be determined using ultra-wideband location tracking of the first receiver in the environment. As such, the (more accurate) second technique may include tracking the first receiver using ultra-wideband location tracking. This tracking may be continuous (e.g., to have a continuous track of the location of the first receiver), or the location may be tracked only at the first and second times.

Ultra-wideband location tracking may provide improved accuracy over other techniques such as RSSI and AoA, but at a greater cost. For example, ultra-wideband location tracking may provide a location accuracy of approximately 10cm, compared to RSSI which may provide a location accuracy of between 1 and 4 metres.

The location of the asset relative to the receivers may be determined using one or more of a triangulation technique, a trilateration technique and/or a multilateration technique. Using triangulation, the location of the asset relative to the receivers may be determined by measuring angles to the asset from the known location of the receivers (e.g., using AoA), and then using trigonometry to determine the location of the asset relative to the receivers. Using trilateration, the location of the asset relative to the receivers may be determined by measuring the distance between the asset and the receivers (e.g., which can be detected using RSSI), and then using trigonometry to determine the location of the asset relative to the receivers. Using multilateration, the location of the asset relative to the receivers may be determined by measuring the times of arrival of the signals at the receivers.

In some examples, the first receiver (and/or any other moving receiver) may be positioned in or on a mobile device (e.g., a mobile telephone device, a tablet, etc.).

By providing the first receiver in or on a mobile device, the location techniques already implemented in the mobile device can be utilized in the above method. Further modifications of the hardware may therefore not be required.

Furthermore, the first receiver (and/or any other moving receiver) can be moved in the environment by an operator of the mobile device moving in the environment.

Alternatively, the first receiver may be positioned on a movable object, such as a forklift.

In some examples, the first receiver may comprise a camera (e.g., if the received signals comprise visible light). The second receiver (and/or additional receivers) may comprise a camera.

The second receiver (and/or additional receivers) may be positioned in or on a mobile device. Alternatively, the second receiver (and/or additional receivers) may be positioned on or in an alternative moving object (such a as a forklift) or a stationary object (such as a pallet carrier etc.).

The method may further comprise reducing a multipath interference error on the received signals.

A multipath interference (e.g., resulting from one or more signals that have been reflected before being received by the receiver) may be detected using one or more techniques/methods. The multipath interference error can then be reduced by removing/discarding any signals that have been reflected and thus which contribute to multipath interference.

Multipath interference may be detected using one or more statistical methods, machine leaning techniques, data mining and/or particle filter tracking techniques.

For example, multipath interference may be identified by continuously tracking a received signal (e.g., the signals received at the moving first receiver and/or at any other receiver) to identify phase changes caused by reflection of the signal.

The received signals may be circular polarized signals. Circular polarized signals change their spin each time they rebound/reflect from an object. Detecting the spin direction (e.g., left or right) e.g., by using two circular polarized antennas, one being left-hand circular polarized (LHCP) and the other being right-hand circular polarized (RHCP) on the receiver, may be used to detect a reflection, and thus an incorrect measurement. The signal corresponding to this incorrect measurement may then be discarded for not being a direct signal from the tag.

Multipath interference may be identified by continuously tracking received signals (e.g. the signals received at the first receiver and/or at any other receiver) to identify sudden shifts (orjumps) in RSSI. This is because a reflected signal loses strength upon reflection such that reflected signals can be identified by sudden jumps in RSSI. The signals resulting in these sudden shifts can then be discarded.

Multipath interference may be identified by measuring a doppler frequency shift of the received signal. The frequency of the signal may change slightly each time it rebounds/reflects, wherein the frequency shift depends on the material of the reflector. Therefore, measuring a doppler frequency shift of the received signal may be used to determine whether the signal has been reflected. If the signal has been reflected, it is not a direct signal and thus it may be discarded.

Multipath interference may be identified statistically, by calculating the location of the tag for a plurality (e.g., a majority, or every) signal received at the receivers, and then removing outliers.

Multipath interference may be identified by measuring the Signal over Noise Ratio (SNR) or the Channel State Information (CSI) and comparing a plurality of successive measurements.

Multipath interference may be identified by signal processing, e.g., by using wideband characteristic of ultra-wideband location techniques to get different multipath behaviours across different frequency bands and then assembling the signals to reduce or "mute" the echoes, as described in *S. O. Schmidt et al.* [1].

Preferably, multipath interference is detected using a combination of one or more of the above techniques/methods. This allows for improved detection of multipath interference, and thus improved multipath detection accuracy.

The above multipath interference detection methods may be used as a statistical method or with machine learning techniques.

The step of determining the location of the asset in the environment may be performed by one or more processors. The one or more processors may be located at a remote computing device or server (e.g., outside of the environment), for example. As such, the method may comprise transmitting, to a remote server, data corresponding to the signals received at the first and second receiver. The method may comprise transmitting, to the remote server, data corresponding to the track of the location of the first receiver and the location of the second receiver.

The one or more processors may be located in the environment (e.g., in the warehouse, hospital or airport). For example, the one or more processors may be located at the first and/or second receiver such that the step of determining the location of the asset in the environment may be performed at or in the first and/or second receiver. The one or more processors may be located in a computing device connected to the first and/or second receiver, e.g., via a wired connection. In these examples, there is no requirement to transmit data corresponding to the signals received at the first and second receiver and/or the track of the location of the first receiver and the location of the second receiver, to a remote computing device/server positioned outside of the environment.

Optionally (e.g., if the location of the asset in the environment is determined by a processor in the environment) the determined location of the asset in the environment may be transmitted to a remote server (e.g. a server outside of the environment).

Preferably, the location (e.g., coordinates) of the asset in the environment, as determined by the above methods, may be output as feedback to a user. For example, the determined location may be output for display, e.g., to a display screen, a mobile device, a computer device etc. In this way, a user (e.g., operator of a warehouse, airport, or hospital) is provided with the location of the asset such that they can find the asset more efficiently.

According to a second aspect, there is provided a system configured to perform the method of the first aspect.

As such, there is provided a system for locating an asset in an environment, the system comprising:
a first receiver configured to receive:
   a signal from a tag associated with the asset at a first time; and
   a signal from the tag associated with the asset at a second time, wherein the tag is positioned on or adjacent to the asset, and wherein the first receiver has moved location in the environment between the first time and the second time;
a second receiver configured to receive a signal from the tag associated with the asset; and
a controller configured to determine the location of the asset in the environment based on the signal received at the first receiver at the first time, the signal received at the receiver at the second time, the signal received at the second receiver, a track of the location of the first receiver in the environment at the first time and the second time, and a location of the second receiver in the environment at the time when the second receiver received the signal.

The controller may comprise one or more processors, wherein one or more of the processors may be located at a remote computing device or server (e.g., outside of the environment) or in the environment.

The system may comprise three, four, five, six or more receivers. If the system comprises additional receivers further to the first receiver and the second receiver, one or more of these additional receiversmay be moving relative to the environment. One or more of the additional receivers may be stationary, e.g., fixed in the environment.

A plurality of assets may be located in the environment, and the method may be for locating an asset from the plurality of assets in the environment. Each of the plurality of assets may have a respective tag associated with the asset, wherein the respective tag is positioned on or adjacent to its corresponding asset.

The tags may comprise active tags (e.g., the tags may use a power source, e.g., battery power source, to broadcast the signal) and/or passive tags (e.g., the tags may not have their own power source but transmit a signal in response to receiving (e.g., radio frequency) energy from one or more of the receivers and/or from another transmitter.

The invention includes the combination of the aspects and preferred features described except where such a combination is clearly impermissible or expressly avoided.

### Summary of the Figures

Embodiments and experiments illustrating the principles of the invention will now be discussed with reference to the accompanying figures in which:
**Fig. 1** shows a flow diagram of a method for locating an asset in an environment;
**Fig 2** is a schematic diagram of a system for locating an asset in an environment, for example by the method shown in Fig. 1; and
**Fig. 3** shows a first schematic diagram 300a and a second schematic diagram 300b, illustrating the effects of multipath interference in an environment.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

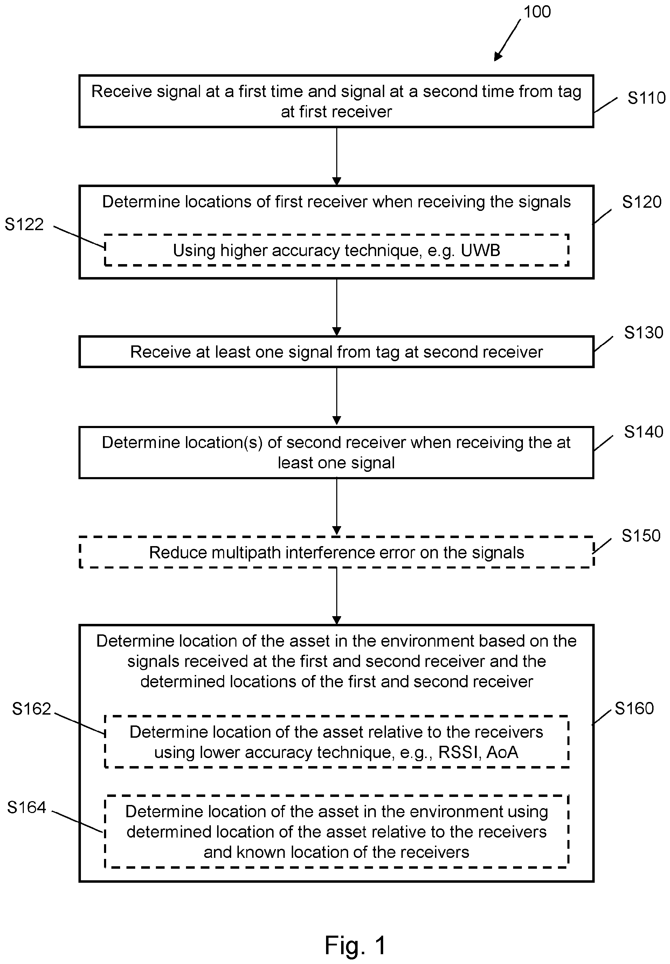

A method 100 and system 200 for locating an asset in an environment are described below with reference to Figs. 1, 2 and 3.

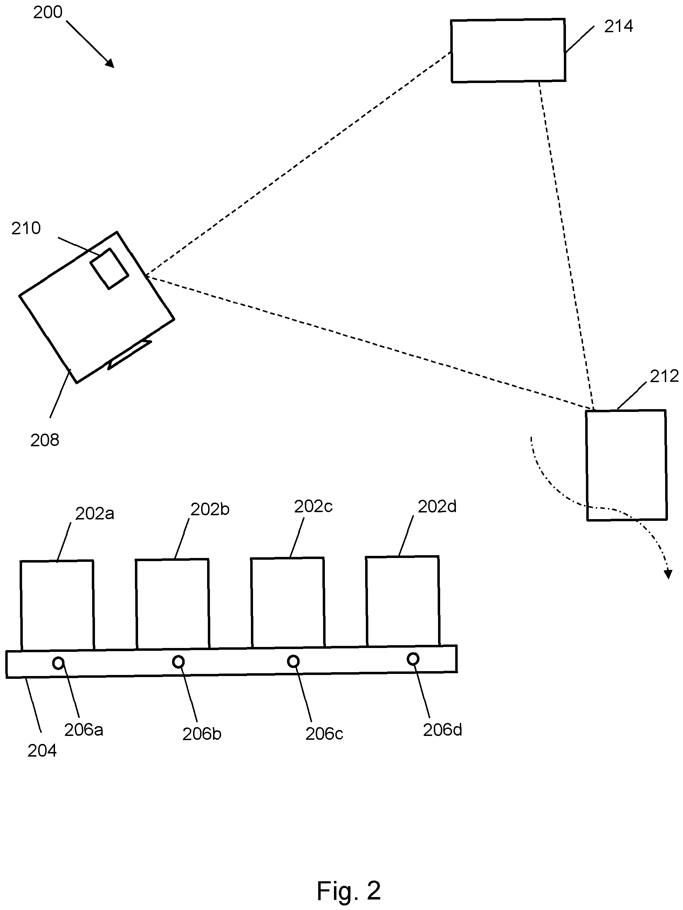

The environment may be a room, or part of a room, such as a warehouse, airport or hospital. The environment may include a plurality of assets, such as assets 202a-202d shown in Fig. 2. There may be a vast number of assets, e.g., hundreds or thousands of assets in the environment. With increasing numbers of assets in the environment, or with an increasing size of the environment, it can be increasingly difficult to efficiently find the correct asset from the plurality of assets with conventional methods.

Each asset 202a-202d in the environment may be associated with a respective tag, such as tags 206a-206d in Fig. 2. The tags may be positioned on the assets, or adjacent thereto. For example, the tags may be located on a shelf 204 upon which the corresponding asset is located. In other examples, the tags may be located on a container containing the corresponding asset. It is preferable to provide the tags as close as possible to their corresponding asset, as the location of the tag is used to indicate the location of the asset.

The tags may be RFID tags, for example. They may be passive tags (e.g., tags which emit signals in response to receiving RF energy) or active tags (which are connected to a power source, such as a battery, and so can emit signals using power from the connected power source). The tags may emit a continuous signal, or a plurality of discrete signals, for example.

A plurality of receivers 208, 212 may be located in the environment. Fig. 2 shows 2 receivers, but there may be more than 2 receivers, e.g., 3, 4, 5, 6, 7, 8, or more receivers. The receivers may be configured to receive signals emitted from the tags. Where the tags are passive tags, one or more of the receivers may also be configured to emit RF energy to cause the tag to emit one or more signals. When the signal emitted from the tags are continuous, the receivers may be configured to sample that signal emitted in order to receive a plurality of signals at different times.

The plurality of receivers 208, 212 include at least one receiver 212 which is moving in the environment (e.g., relative to the environment). The remaining receiver(s) may be stationary/static (e.g. fixed in relation to the environment). Alternatively, one or more (or all) of the remaining receivers may be moving in the environment.

The at least one moving receiver 212 may be located in or on a mobile device. As such, an operator working in the environment, e.g., warehouse, may move the mobile device (and thus receiver 212) simply by carrying it around the environment. Alternatively, the at least one moving receiver 212 may be positioned on a forklift, or there may be an automated mechanism for moving the receiver 212 in the environment.

Stationary receivers, such as receiver 208 shown in Fig. 2, may be positioned on a wall or ceiling or other stationary object in the environment.

The signals emitted by the tags may include RF signals. In other examples, the signals may include visual, UV, IR, or sound signals (which may be within the human hearing range or outside the human hearing range but detectable by a sound receiver).

The plurality of receivers may be configured to communicate with a controller 210. The controller 210 may be configured to process the signals received at the plurality of receivers 208, 212 and to determine a location of a required asset of the plurality of assets 202a-202d.

The controller 210 may comprise one or more processors, which may be positioned in one (or more) of the receivers. This is the arrangement shown in Fig. 2. One or more of the processors may be located at a remote computing device or server (e.g., at server 214 shown in Fig. 2), which may be located inside the environment or outside of the environment.

The location of the required asset of the plurality of assets 202a-202d determined by the controller 210 may be in the form of coordinates in the environment, or directions to the required asset. The determined location of the asset may be transmitted to a remote server (e.g., a server outside of the environment), such as server 214.

The location of the required asset in the environment may be output as feedback to a user, e,g, via a mobile device, such as the mobile device in/on which the moving receiver 212 is located.

In order to determine the location of a required asset in the environment (e.g. asset 202b in Fig. 2), a location of the corresponding tag 206b is determined. The location of the required asset 202b is assumed to correspond to the location of the corresponding tag 206b, because the tag 206b is located adjacent to or on the required asset 202b.

In order to determine the location of the required asset (and in particular its corresponding tag), a plurality of signals from the tag are received at a first moving receiver 212 (see e.g. Step S110 of Fig.1). The plurality of signals includes a signal received at a first time and a signal received a second time, wherein the second time is different to the first time.

The first moving receiver 212 may receive the signals at the first time and the second time by sampling, at the first time and the second time, a continuous signal transmitted from the tag. The continuous signal may be a constant continuous signal.

In some examples, the signals received at the first moving receiver 212 may correspond to discrete signals transmitted from the tag. The discrete signals may carry a constant value (e.g., tag identifier), which can be extracted, demodulated and decoded from the signal.

The first moving receiver 212 moves location in the environment between receiving these signals such that when the first moving receiver 212 receives a first signal (e.g., at the first time), it is at a first location, and when the first moving receiver 212 receives a second signal (e.g., at the second time), it is at a second, different location. The location of the first moving receiver 212 when it receives the signals (i.e., at the first and second time) is tracked (see e.g., Step S120 of Fig. 1).

The location of the first moving receiver 212 may be determined continuously, or may be determined intermittently, e.g., only when the first moving receiver 212 receives a signal from the tag.

The track of the location of the first moving receiver 212 may be determined using a higher accuracy technique, such as ultra-wideband location tracking techniques (see e.g. Step S122 of Fig. 1). As such, the track of the location of the first moving receiver 212 may be accurate to approximately 5-10 cm accuracy, for example.

At least one signal from the tag is also received at a second receiver 208 (see e.g. Step S130).

As mentioned above, the second receiver 208 may be stationary in the environment, or moving in the environment.

The signals may be received at the second receiver 208 before, during or after the time period in which the signals are received at the first moving receiver 212. For example, in the method 100 of Fig. 1, step S130 may be performed before, during or after step S110.

Similarly to the first receiver, the second receiver 208 may receive a signal by sampling a continuous (e.g., constant) signal transmitted from the tag. Alternatively, the second receiver 208 may receive a discrete signal transmitted from the tag. In some examples, a same signal transmitted from the tag may be received at the first receiver 212 and the second receiver 208. However, the signals received, and in particular the signal power (RSSI) and/or Angle of Arrival, AoA, of the signals received at the first and second receiver will be different due to multipath interference resulting from the different locations of the two receivers, and because the distances between the first and second receivers and the tag are different.

The location of the second receiver at the time(s) when the second receiver 208 receives the signal from the tag may also be determined (see e.g. step S140). The location(s) of the second receiver 208 may also be determined using a higher accuracy technique such as ultra-wideband tracking techniques. If the second receiver 208 is a moving receiver, a track of the location of the second receiver 208 may be determined in a corresponding way as for the first receiver 212. If the second receiver 208 is stationary, the location of the second receiver 208 may be known, and thus predefined (e.g., it may be determined when installing the static second receiver 208 in the environment). Such a predefined location may be stored in a storage device, and retrievable by one or more processors (e.g., controller 210).

One or more processors (e.g., controller 210) may perform the location tracking of the receivers.

The signals received at the first and second receiver may be transmitted to the one or more processors for processing. As such, the one or more processors may then receive information related to the signals received at the receivers, and the location tracks of the receivers.

The multipath interference error on the signals received at the first and/or second receivers may then be reduced (see e.g. step S150).

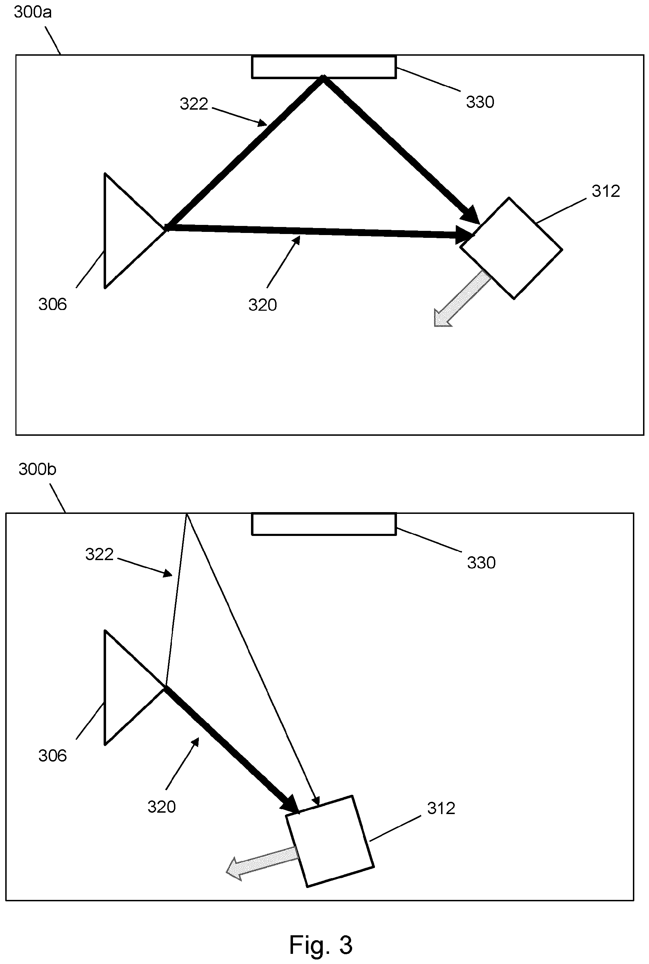

Multipath interference occurs when a signal arrives at a receiver via two or more routes. This is shown in schematic 300a of Fig. 3. Here, a tag 306 emits a signal. The signal travels directly to a receiver 312, as shown by arrow 320. However, the signal can also reflect off an object 330 before being received at receiver 312, as shown by arrow 322. The reflected signal 322 introduces an error in the measure of distance or angle which can be determined by the signal, which in turn introduces an error in the location of the tag 306 determined from this distance or angle. When the receiver is stationary, this multipath interference error is substantially constant overtime, and thus cannot be easily measured or reduced.

However, if the receiver 312 moves between receiving signals, then the multipath interference error changes and can thus be detected. For example, schematic 300b shows the receiver 312 from schematic 300a in a new location in the environment compared to in schematic 300a. The received signals 320, 322 from the tag 306 here include a different multipath interference error because signal 322 has reflected off a wall rather than object 330 and thus signal path 322 is a different length and at a different angle compared to in schematic 300a.

This change in multipath interference error can therefore be detected and reduced, e.g. by reducing the effect of signals that have been reflected and thus which contribute to multipath interference.

Multipath interference may be detected using one or more statistical methods, machine leaning techniques, data mining and/or particle filter tracking techniques.

For example, multipath interference may be identified by continuously tracking a received signal (e.g., the signals received at the moving first receiver and/or at any other receiver) to identify phase changes caused by reflection of the signal.

The received signals may be circular polarized signals. Circular polarized signals change their spin each time they rebound/reflect from an object. Detecting the spin direction (e.g., left or right) e.g., by using two circular polarized antennas, one being left-hand circular polarized (LHCP) and the other being right-hand circular polarized (RHCP) on the receiver, may be used to detect a reflection, and thus an incorrect measurement. The signal corresponding to this incorrect measurement may then be discarded for not being a direct signal from the tag.

Multipath interference may be identified by continuously tracking received signals (e.g. the signals received at the first receiver and/or at any other receiver) to identify sudden shifts (orjumps) in RSSI. This is because a reflected signal loses strength upon reflection such that reflected signals can be identified by sudden jumps in RSSI. The signals resulting in these sudden shifts can then be discarded.

Multipath interference may be identified by measuring a doppler frequency shift of the received signal. The frequency of the signal may change slightly each time it rebounds/reflects, wherein the frequency shift depends on the material of the reflector. Therefore, measuring a doppler frequency shift of the received signal may be used to determine whether the signal has been reflected. If the signal has been reflected, it is not a direct signal and thus it may be discarded.

Multipath interference may be identified statistically, by calculating the location of the tag for a plurality (e.g., a majority, or every) signal received at the receivers, and then removing outliers.

Multipath interference may be identified by measuring the Signal over Noise Ratio (SNR) or the Channel State Information (CSI) and comparing a plurality of successive measurements.

Multipath interference may be identified by signal processing, e.g., by using wideband characteristic of ultra-wideband location techniques to get different multipath behaviours across different frequency bands and then assembling the signals to reduce or "mute" the echoes, as described in *S. O. Schmidt et al.* ^{[1]}.

Preferably, multipath interference is detected using a combination of one or more of the above techniques/methods. This allows for improved detection of multipath interference, and thus improved multipath detection accuracy.

The above multipath interference detection methods may be used as a statistical method or with machine learning techniques.

The location of the required asset in the environment (specifically, the corresponding tag in the environment) is determined (see e.g. step S160). The location of this asset in the environment is determined by one or more processors, based on the signals received at the receivers and the determined locations of the receivers at the time when the receivers received the signals.

To locate the asset in the environment, the location of the asset relative to the receivers may be determined (see e.g. step S162). This may be determined using a Received Signal Strength Indication, RSSI, and/or an Angle of Arrival, AoA, of one or more of the signals received at receivers and one or more of a triangulation technique, a trilateration technique and/or a multilateration technique. These techniques are generally less accurate than techniques used to determine the locations of the first and second receiver. In particular, they may result in a location accuracy of between 1 and 4 metres.

The location of the asset in the environment (specifically, the corresponding tag in the environment) may be determined using the location of the asset relative to the receivers, and the locations of the receivers (see e.g. step S164 of Fig. 1).

The location of the asset in the environment (e.g. coordinates) may then be output as feedback to the user, e.g. via a mobile device, such that the user can easily find the required asset in the environment.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

### References

[1] S. O. Schmidt, H Hellbrück, Detection and Identification of Multipath Interference with Adaption of Transmission Band for UWB Transceiver Systems, IPIN 2021 WiP Proceedings, November 29 - December 2, 2021

## Claims

1. A method for locating an asset in an environment, the method comprising:
receiving, at a first receiver, a signal from a tag associated with the asset at a first time, wherein the tag is positioned on or adjacent to the asset;
receiving, at the first receiver, a signal from the tag associated with the asset at a second time, wherein the second time is different to the first time, and wherein the first receiver has moved location in the environment between the first time and the second time;
receiving, at a second receiver, a signal from the tag associated with the asset; and
determining the location of the asset in the environment based on the signal received at the first receiver at the first time, the signal received at the first receiver at the second time, the signal received at the second receiver, a track of the location of the first receiver in the environment at the first time and the second time, and a location of the second receiver in the environment at the time when the second receiver received the signal.

2. The method of claim 1, wherein the signals received at the first and second receiver comprise electromagnetic wave signals.

3. The method of claim 1 or claim 2, wherein the signals received at the first and second receiver comprise RF signals.

4. The method of any preceding claim, wherein the second receiver has a fixed location in the environment.

5. The method of any of claims 1-3, further comprising:
receiving, at the second receiver, a signal from the tag associated with the asset at a third time;
receiving, at the second receiver, a signal from the tag associated with the asset at a fourth time, wherein the fourth time is different to the third time, and wherein the second receiver has moved location in the environment between the third time and the fourth time.

6. The method of any preceding claim, further comprising:
receiving, at a third receiver, at least one signal from the tag associated with the asset, wherein determining the location of the asset in the environment is additionally based on the at least one signal received at the third receiver, and a location of the third receiver in the environment at the time when the third receiver received the at least one signal.

7. The method of any preceding claim, wherein the environment includes a plurality of assets, and wherein the number of assets in the environment is larger than the number of receivers in the environment.

8. The method of any preceding claim, wherein determining the location of the asset in the environment includes:
determining a location of the asset relative to the receivers; and
determining the location of the asset in the environment based on the location of the asset relative to the receivers, the track of the location of the first receiver in the environment and the location of the second receiver in the environment.

9. The method of claim 8, wherein the location of the asset relative to the receivers is determined using a first technique, and the track of the location of the first receiver in the environment is determined using a second technique, the second technique having a higher accuracy than the first technique.

10. The method of claim 8 or claim 9, wherein determining the location of the asset relative to the receivers includes using a Received Signal Strength Indication, RSSI, and/or an Angle of Arrival, AoA, of one or more of the signals received at the first receiver and/or the second receiver.

11. The method of any of claims 8-10, wherein the location of the asset relative to the receivers is determined using one or more of a triangulation technique, a trilateration technique and/or a multilateration technique.

12. The method of any preceding claim, wherein the track of the location of the first receiver in the environment is determined using ultra-wideband location tracking of the first receiver in the environment.

13. The method of any preceding claim, wherein the first receiver is positioned in or on a mobile device.

14. The method of any preceding claim, further comprising:
reducing a multipath interference error on the signals using one or more of: statistical analysis, machine learning, data mining and/or particle filter tracking techniques.

15. A system for locating an asset in an environment, the system comprising:
a first receiver configured to receive:
a signal from a tag associated with the asset at a first time;
a signal from a tag associated with the asset at a second time, wherein the tag is positioned on or adjacent to the asset, and wherein the first receiver has moved location in the environment between the first time and the second time;
a second receiver configured to receive a signal from the tag associated with the asset; and
a controller configured to determine the location of the asset in the environment based on the signal received at the first receiver at the first time, the signal received at the receiver at the second time, the signal received at the second receiver, a track of the location of the first receiver in the environment at the first time and the second time, and a location of the second receiver in the environment at the time when the second receiver received the signal.
